# EUROPEAN PATENT SPECIFICATION

(11) **EP 2 981 798 B1**
(45) Date of publication and mention of the grant of the patent: **02.01.2019**
(21) Application number: 13799124.6
(22) Date of filing: 08.05.2013
(51) Int. Cl.: G01M 5/00, G06F 19/00

(54) **DEVICE FOR SURVEILLANCE OF AN ARTIFICIAL STRUCTURE**
VORRICHTUNG ZUR ÜBERWACHUNG EINER KÜNSTLICHEN STRUKTUR
DISPOSITIF POUR SURVEILLANCE DE STRUCTURE ARTIFICIELLE

(43) Date of publication of application: 10.02.2016
(73) Proprietor: Siemens Aktiengesellschaft, 80333 München (DE)
(72) Inventor: KUSHERBAEVA, Victoria Timurovna, St. Petersburg 193318 (RU); PYAYT, Alexander Leonidovitch, St. Petersburg 198207 (RU); KOZIONOV, Alexey Petrovich, Pskov 180005 (RU)
(74) Representative: Isarpatent
(86) International application number: PCT/RU2013/000391
(87) International publication number: WO 2014/182191

(56) References cited:
- US-A1- 2011 184 567
- A Pyayt ET AL: "Data-driven modelling for flood defence structure analysis" In: "Comprehensive Flood Risk Management", 1 November 2012 (2012-11-01), CRC Press, XP055116080, ISBN: 978-0-20-337451-1 pages 978-0, DOI: 10.1201/b13715-44, the whole document
- JOHN H. PORTER ET AL: "Staying afloat in the sensor data deluge", TRENDS IN ECOLOGY & EVOLUTION, vol. 27, no. 2, 1 February 2012 (2012-02-01), pages 121-129, XP055116072, ISSN: 0169-5347, DOI: 10.1016/j.tree.2011.11.009

## Description

The present invention relates to a device for surveillance of an artificial structure, an apparatus for use in a device for surveillance of an artificial structure as well as a method for surveillance of an artificial structure.

An artificial structure is a structure created by man, such as buildings, roads, bridges, earthen dams, dikes, and the like, which should preferably be provided with monitoring and/or application of structural health monitoring (SHM) methods, in order to provide a surveillance of the artificial structure. Usually, such artificial structures may fail during their determined operation because of various reasons such as developing failures, environmental and/or atmospherical impacts, earthquakes or the like. Onset of failure can be detected by using a physical model such as the finite element model, or by analysis of measurements gathered from sensors installed for constant monitoring of the artificial structures' behaviour.

Application and effectiveness of data-based methods depend on properties of available data, for example, whether the data has gaps, jitters, or the like. The data is usually provided as a continuous data stream supplied from each of the sensors. Moreover, the sensors usually apply sampling on their measurements and, consequently, supply their data as sampled continuous data streams. If a plurality of sensors is provided, which supply data, multi-dimensional data processing is necessary due to a serial polling procedure that is usually applied for system with multiple sensors.

The following characteristics of multi-dimensional data collected during serial polling appear. One characteristic is different sampling of measurements and delays between measurements. For example, in the case of monitoring a dam made from concrete, sensors for vibration parameters usually operate with measurements at high rates, for example, by using sampling rates in the range of a few ms or s. In contrast thereto, a water level is better to be measured with a low rate, for example, a sampling rate in the range of a few minutes or an hour. In this regard, very short sampling rates could cause inaccurate measurement results because the value which should represent the water level is superimposed by arbitrary value deviation caused by waves or the like. Moreover, unstable sampling, jitter of sampling, or irregular sampling may appear. Last but not least, gaps in the measurements may appear caused by undesired impacts such as system shutdown, system fault, or sensor fault.
The before mentioned characteristics result in problems so that for description of each signal, each measurement and a corresponding time stamp has to be saved. Moreover, multi-dimensional signal processing or machine learning algorithms for data analysis cannot be applied, especially, when sampling of the signals is different. Last but not least, suited signal processing algorithms or machine learning algorithms cannot be applied to data based on unstable sampling of measurements. Finally, gaps in measurements correspond to a loss of information which may affect algorithms for adjusting and learning in an undesired way.

Document XP055116080 (Data-driven modelling for flood defence structure analysis, A.L. Pyayt et al., 2013) discloses data pre-processing and processing procedures applied to sensor data collected from sensors located in flood defences. Document XP055116072 (Staying afloat in the sensor data deluge, John H. Porter et al., 2012) presents a review of methods for processing and analyzing massive environmental sensor data sets, wherein aspects of data synchronization and gap-filling are discussed. US 2011/184567 Al discloses a system for transforming sensor signals for a physical parameter associated with fluid flow through conduit in a bore well using data reconstruction techniques.

Consequently, it is the object of the invention to provide for an apparatus and a method that is enabled to provide a full data preparation procedure in order to allow a complete automatization of the surveillance of an artificial structure.

According to a first apparatus-related aspect of the invention, there is provided an apparatus for use in a device for surveillance of an artificial structure according to claim 1.

According to a second aspect, a device for surveillance of an artificial structure is provided, comprising: at least two sensors, each of the at least two sensors being mounted to the artificial structure and supplying a sampled continuous data stream; and an apparatus according to the first aspect, wherein the at least two sensors are communicatively coupled to said apparatus.

According to a third method-related aspect, there is provided a method for surveillance of an artificial structure according to claim 10.

The at least two sensors may be sensors that are adapted to detect certain physical characteristics of the artificial structure that is to be received for the purpose of surveillance. So, various physical parameters of the artificial structures can be measured by use of sensors adapted to the certain physical characteristic to be measured. For a certain physical characteristic, more than one sensor can be implemented, so that this physical characteristic can be measured, for example, at different locations of the artificial structure or the like. So, for example, tension sensors may be provided at all critical positions of the artificial structure so as to get information about the complete artificial structure related to the tension load. Similarly, temperature sensors, vibration sensors, or the like may be provided in order to measure the corresponding physical characteristic. Moreover, sensors of different type for measurement of different physical characteristics may be combined to get a corresponding overview of the status of the artificial structure. Each sensor is in communication connection with the control module so that the control module receives a respective sampled continuous data stream from each of the connected sensors in response to their measurements.

In order to prepare the different sampled continuous data streams of the different sensors, the control module is configured to define a general time grid. The general time grid provides a time base such as a common time grid in order to allow a common scaling of the individually sampled continuous data streams of the individual sensors.

Moreover, the control module is configured to cause detecting a gap in the sampled continuous data streams of the at least two sensors. Preferably, detecting of a gap is provided before synchronizing the sampled continuous data streams so as to maintain proper information about the position of the gap in the sampled continuous data streams. The control module is further adapted to detect more than one gap independent from the sampled continuous data stream containing the gap. So, the control module is preferably aware of all gaps occurring anywhere in the sampled continuous data streams.

The control module causes synchronizing of the sampled continuous data streams received with respect to the general time grid so as to create respective synchronized data streams. Synchronizing may be performed by the control module itself or a processing unit communicatively connected with the control module. The result of synchronizing is that all sampled continuous data streams are scaled to the same time base, namely, the general time grid. However, it should be noted that at this status, the synchronized data streams still contain the gaps. However, synchronizing may affect values and extension of the gap. A gap is generally characterized by an abnormal value in the sampled continuous data stream. An abnormal value can be, for example, the value of zero or a value that usually is not created by the corresponding sensor or the like.

Last but not least, the control module causes processing a gap-filling procedure upon the synchronized data streams in order to generate application input data. The application input data can be data for further use of analysis applications, so, such data can also be referred to as further use data, upper level data, or the like. The gap-filling procedure may use a mathematic method for recovering data of the data gap.

Generally, the apparatus and/or the control module can be implemented as/in chip sets to connected devices and/or modems thereof. More generally, various systems which allow for a surveillance operation mode, especially relying on safety functions may see performance improvement, especially in view of complex network topologies, with the invention being implemented thereto.

Preferably, the control module is further configured to select the gap-filling procedure by at least one of a group comprising linear gap-filling, Fourier-transform-based gap-filling, and Singular-Spectrum-Analysis-based gap-filling. The control module may be configured to select the gap-filling procedure according to certain requirements of the corresponding data streams. The gap-filling procedure may also be pre-defined.

According to the invention, the control module is configured to cause the use of interpolation when synchronizing. This allows providing for easy adaptation of the sampled continuous data streams to the general time grid. Interpolation can be based on corresponding mathematic interpolation methods, such as, e.g., linear interpolation, spline-interpolation, combinations thereof, or the like.

In an exemplary embodiment, the control module is further configured to cause setting of a gap indicator for a gap detected in the at least one of the sampled continuous data streams. The gap indicator can be provided by a flag that is connected with the gap. The flag may further contain or be allocated to information about the time extension of the gap. The gap indicator allows identifying easily the timely position of a certain gap. Moreover, the flag can be provided with a unique identification (ID) identifying a certain gap detected.

According to an additional exemplary embodiment, the control module is configured to cause saving the application input data to a storage. The storage can be provided in the apparatus or it can be a separate component distal from the apparatus. The storage is in communication connection with the control module. The storage may be provided by a random access memory (RAM), a programmable read-only memory (PROM), a hard disc drive, a compact disc drive, combinations thereof, or the like.

Moreover, according to yet another embodiment, the control module is further configured to cause transmitting of the application input data for further analysis. For this purpose, the control module can be in communication connection with a transmitter, which, in turn, is in communication link with an application providing for further analysis. Transmitting may be provided by a wireless communication link such as radio, infrared, or the like, or by a cable-bound communication link such as a telephone network, combinations thereof, or the like.

According to a certain embodiment, the control module is configured to cause applying the Fourier-transform of Fourier-transform-based gap-filling on all data including the interpolated data. This allows a proper gap filling procedure by reasonable expenses related to processing.

According to an additional embodiment, the control module is configured to cause providing a discrete Fourier-transform and defining a threshold, and to cause the inverse discrete Fourier-transform considering only coefficients of the spectrum having a value higher than the threshold. This allows providing an easy way of gap filling, which is reliable and can be adjusted easily by variation of the threshold. Depending on the result, the threshold can be adapted by the control module. For this purpose, the Fourier-transform-based gap-filling can be executed by providing an artificial gap and comparing the result with the complete data stream. This allows adjusting the threshold in the present application for surveillance of a certain artificial structure.

According to yet another exemplary embodiment, the control module is further configured to cause initializing the synchronized data streams and a number of Singular-Spectrum-Analysis components for gap-filling and performing pre-processing before performing the Singular-Spectrum-Analysis-based gap-filling. In this manner, a precise and reliable gap-filling can be achieved. However, for this purpose, the control module preferably includes a certain processing unit, which is adapted for this procedure. Additionally or alternatively, the control module is in communication connection with an external processing unit such as a computer or the like.

The teachings of the present invention can be readily understood and at least some additional specific details will appear by considering the following detailed description of an exemplary embodiment in conjunction with the accompanying drawings, in which:
- FIG 1: shows schematically the sampling of sensors connected with an artificial structure to be surveyed over the time and in the lowest time bar the sampling rate according to a general time grid;
- FIG 2: shows a diagram showing schematically a graph related to a signal of a sensor detecting a water level, wherein the graph contains two gaps, wherein the abscissa relates to the date and the ordinate relates to the water level in meters;
- FIG 3: shows schematically a block diagram of a flow chart related to data synchronization and preparation algorithm according to the invention;
- FIG 4: shows schematically a flow chart for a gap-filling using discrete Fast-Fourier-transform;
- FIG 5: shows schematically a flow chart for a gap-filling with Singular-Spectrum-Analysis according to the invention;
- FIG 6: shows schematically a diagram based on the diagram of FIG 2, wherein the gap is filled by use of a gap-filling with discrete Fast-Fourier-transform;
- FIG 7: shows the diagram according to FIG 6, wherein the gap is filled by using gap-filling based on Singular-Spectrum-Analysis; and
- FIG 8: shows a device for surveillance of an artificial structure according to the invention.

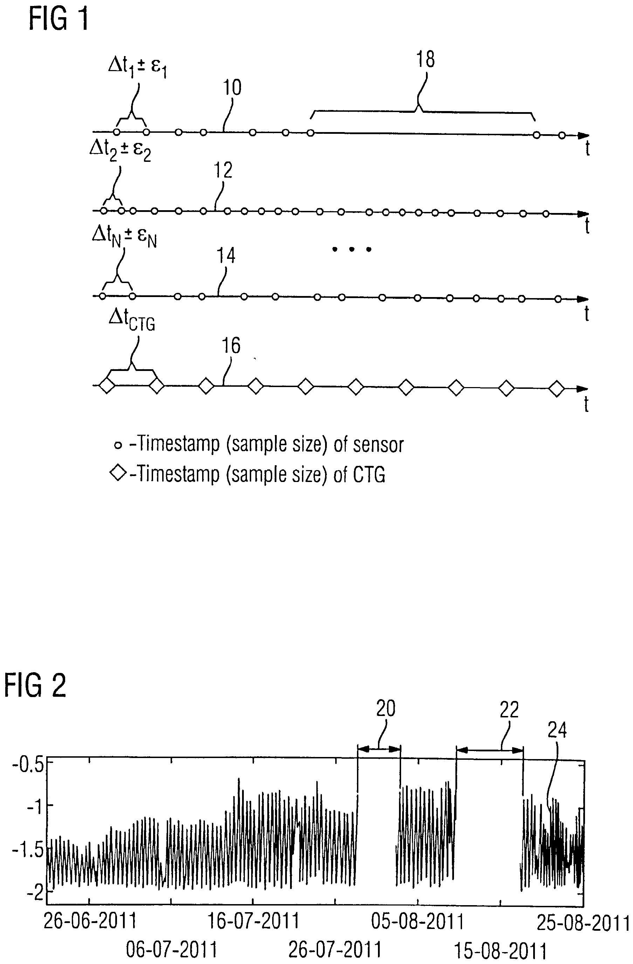

FIG 1 shows schematically a diagram showing sampled continuous data streams of sensors, namely sensors 10, 12, 14, which represent a sensor 1, a sensor 2, and a sensor N representing a couple of sensors, wherein each provides a sampled continuous data stream. In FIG 1, for each of the sensors 10, 12, 14, is provided a time bar horizontally oriented, wherein the time proceeds from the left to the right. On the time bars, time points are indicated, where corresponding measured data is transmitted from the sensors 10, 12, 14. The lowermost time bar in FIG 1 corresponds to a general time grid or common time grid, respectively, whose purpose is detailed further below. The sensors 10, 12, 14 are provided in a bridge as an artificial structure so that the constitution of the bridge can be surveyed by evaluation of the data transmitted by the sensors. The bridge is not further shown in the figures.

As can be seen from FIG 1, each of the sensors 10, 12, 14 provides a sampled continuous data stream having differing time bases. As can be further seen from FIG 1, the sampled continuous data stream of the sensor 10 comprises a gap 18, where the sensor 10 does not provide any data. Possible reason for such gap 18 is that the sensor 10 has an undesired shutdown and needs to restart. Therefore, in the right portion of the time bar, the sensor 10 continues data transmission.

Moreover, FIG 1 shows that the sampling rates of the sensors 10, 12, 14 are not constant. Rather, the sampling is superimposed by a jitter. So, each sensor 10, 12, 14 is associated with an array of measurements and array of time stamps of these measurements, wherein

Δt_{1...N} ± ε_{1...N} is a sampling of sensor 1...N, where N - is a number of sensor, ε_{1...N} - is a sampling error (jitter); Δt_{CTG} - is a sampling of Common Time Grid.

FIG 2 shows schematically a diagram related to a real signal of a water level provided from a corresponding sensor (not shown) of a dike. The ordinate corresponds to the water level in meters, wherein the abscissa corresponds to the time, especially the date. The graph 24 in the diagram corresponds to the signal as provided from the sensor related to the water level.

As can be seen from FIG 2, the graph 24 comprises two interruptions as gaps 20, 22, during which time periods the sensor does not provide any measurement-related data.

Although the sampled continuous data streams of the sensors 10, 12, 14 could be processed in a singularized way, such as processing based on one-dimensional solutions for data synchronization, multidimensional processing is difficult to realize because of the different sampling rates and distortions of the sampling rates. One-dimensional solutions may comprise averaging measurements, for example, in the case of measurements' rate being proportional to minutes, one can average the measurements, for example, per one hour. In this case, important information of the continuous data stream might be lost. Moreover, interpolation methods can be applied, such as spline-interpolation, local polynomials, linear interpolation or the like, which may additionally include advanced interpolation methods such as non-linear regression models, for example, neural networks. Yet another approach may use a method based on a Kalman-filter in order to solve the time synchronization and minimum delay temporal ordering problem of asynchronous sensor measurements. However, this requires models of measurements sampling and sampling errors. Data reconstruction is possible on a small time interval, but not over reasonable data gaps. The design of a model of measurements appears to be a challenging task. Moreover, gap-filling procedures may be based on Fourier-transformation or Singular-Spectrum-Analysis.

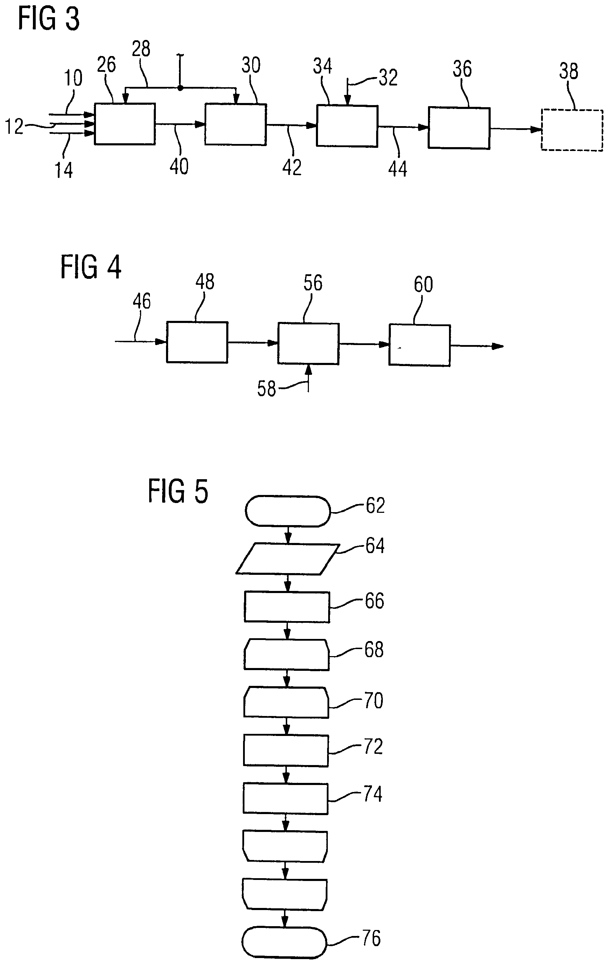

The invention teaches to provide four steps as also shown by referring to FIG 3.
1. Selection of sampling for Common Time Grid;
2. Interpolation of measurements on Common Time Grid (e.g. linear interpolation, spline etc.);
3. Application of gap-filling procedures, e.g. SSA-based (Spectrum-Singular-Analysis) or FFT-based (Fast-Fourier-Transform) procedures;
4. Save the data in a database or send for further analysis.

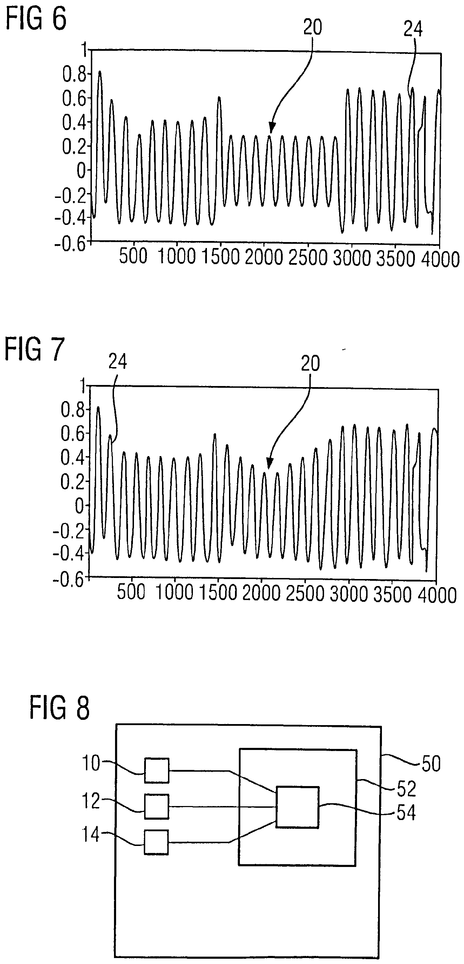

FIG 8 shows schematically a block diagram of a device 50 for surveillance of an artificial structure, namely the before mentioned bridge. As can be seen, the device 50 comprises an apparatus 52, which, in turn, comprises a control module 54. Moreover, the device 50 comprises sensors 10, 12, 14, which are mounted to an artificial structure such as the bridge to be surveyed. Each of the sensors 10, 12, 14 is communicatively connected with the apparatus 52 and, moreover, with the control module 54 of the apparatus 52. So, the control module 54 receives all sampled continuous data streams of each of the sensors 10, 12, 14.

Referring now to FIG 3, the sensors 10, 12, 14 supply their sampled continuous data streams as shown in FIG 1 to the control module 54, which operates as shown in FIG 3. The sampled continuous data streams of the sensors 10, 12, 14 are first examined in order to detect gaps at 26. Moreover, the control module 54 defines a general time grid or a common time grid, respectively. This is considered in the detection of gaps 26. Therefore, the detection of gaps 26 considers the general time grid supplied at 28. Next, interpolation 30 is provided on the data streams supplied at 40 after the detection of gaps 26 to the interpolation operation 30. These data streams further contain information about the gaps 18, 20, 22. At 30, interpolation on the data streams is provided considering the general time grid as supplied by 28, resulting in respective synchronized data streams 42. The synchronized data streams 42 are then further processed by applying a gap-filling procedure at 34 considering input parameters supplied at 32. After gap-filling has been completed, synchronized data streams without gaps 18, 20, 22 are supplied at 44 to a data base 36 in order to store the processed data for further use as application input data. The application input data can be maintained in the data base 36, which may be formed by a storage, for further processing or retrieval. So, the application input data of the data base 36 can be supplied to an optional further processing 38 such as data analysis algorithms.

Although presently interpolation 30 is based on linear interpolation, in an alternative embodiment, a spline-interpolation may be provided.

FIG 4 refers to an embodiment related to gap-filling 34, which is based on Fourier-Transform. Especially, in the present case, Discrete Fast-Fourier-Transform (FFT) is provided, which is an improved algorithm of Discrete Fourier Transform (DFT). The same is for their inverse. Generally, a DFT decomposes a sequence of values into the frequency domain, i.e. components of different frequencies. Since Fourier-based gap-filling of irregularly sampled data leads to unstable results, the invention proposes synchronization of the data streams before implementation of gap-filling.

FIG 4 shows schematically a flow chart of the gap-filling based on FFT. The interpolated data streams, that is, the synchronized data streams, are supplied at 46 to the FFT 48 resulting in a frequency domain signal which is further processed at 56 in order to select base frequencies. At 58, a threshold is supplied to the selection so that only such frequencies are further considered, whose value is higher than the threshold. The further frequencies having a value lower than the threshold are excluded from further processing by setting their value to zero. Such produced signal is further processed at 60 by inverse Fast-Fourier-Transform (iFFT). The result is the continuous data streams without gaps at 44 in FIG 4.

The advantages of this kind of gap-filling are that low computational costs can be achieved and the spectrum of the base frequencies can be kept.

In an alternative embodiment, the gap-filling 34 (FIG 4) may be based on Singular-Spectrum-Analysis (SSA) gap-filling algorithm. SSA provides for a non-parametric spectrum estimation method, which allows separating components of a signal such as trend, periodic, noise, or the like, for further analysis.

A corresponding flow chart of the SSA-based gap-filling procedure is shown in FIG 5. The process starts at 62, where a signal as interpolated on the general time grid and a number of SSA components for gap-filling is initialized at 64 as a first pre-processing. Then, a second pre-processing is provided at 66 performing subtraction of a mean from a signal for the purpose of centering and filling gaps by zeroes. The process continues with an outer loop at 68, wherein the next SSA component is added to the first reconstructed component, wherein the loop is repeated for the selected number of components.

The process proceeds with an inner loop at 70, executing the SSA and the inverse SSA until a convergence criterion in the gaps is met at 70. The inner loop 70 is executed as far as the best estimate of the second reconstructed component is returned. In the present embodiment, the convergence criteria are formed by a ratio of variance of a difference between a previous estimation and the present in relation to variance of the present estimation. If the ratio is less than a tolerance, the next component is added and the outer loop 68 is proceeded to be performed. This procedure is repeated for the selected number of SSA components. The result is synchronized data streams without gaps as continuous data streams 44 (FIG 3). The process ends at 76 by returning gap-filling.

The results of the FFT-based gap-filling and the SSA-based gap-filling are shown in FIG 6 and 7. FIG 6 and 7 correspond to the water level measuring of FIG 2. As can be seen from FIG 6, the result of the FFT-based gap-filling procedure of the gap 20 leads to a signal of the graph 24, which is in the gap 20 added by oscillation having a constant amplitude. Alternatively, the SSA-based gap-filling according to FIG 7 provides for the same gap 20 an oscillation having a smoothed amplitude adapted to the amplitudes of the neighbouring oscillations of the graph 24. So, the SSA-based gap-filling leads to a proper adaptation to local signal properties. Moreover, it distinguishes components of a signal and can deal with non-stationary signals.

**Table 1. Comparison of the gap-filling procedures**

| Gap-filling method | | | |
|---|---|---|---|
| | Linear | FFT | SSA |
| Computational costs | low | medium | high |
| Quality | low | medium | high |

Analysis of the Table 1 shows that selection of the gap-filling procedure to be applied in the general data analysis scheme FIG 3 depends on requirements to the data analysis flow which is to be specified by an expert.

The invention provides for combination of data synchronization and gap-filling methods. Consequently, the suggested approach is able to be implemented as a part of a condition monitoring or surveillance system.

The advantages connected with the invention are that it allows dealing with irregularly sampled measurements, and synchronization of irregularly spaced data onto a general time grid allows further analysis by different algorithms such as one-dimensional or multi-dimensional. Gap-filling preserves dynamic properties of signals, data streams, respectively, and provides recovery of the historical lost part of information which can be used for algorithms and for other applications. So, the application of the invention allows increasing the quality of the data. The suggested approach allows resampling available measurements on demand. Universality of the approach for any system with serial sensor polling or similar system is provided. The invention allows reducing the amount of data to be stored in a data base because the time stamps can be avoided. Instead of storing of time stamps for each time series, only a set of time series with only one array of time stamps is necessary.

Generally, it is noted that, while the above describes example embodiments of the invention, this description should not be viewed in a limiting manner. Rather, there are several variations and modifications, which may be made without departing from the scope of the present invention as defined in the appended claims.

## Claims

1. An apparatus (52) for use in a device (50) for surveillance of an artificial structure provided with at least two sensors (10, 12, 14), each of the at least two sensors (10, 12, 14) being mounted to the artificial structure and supplying a sampled continuous data stream, the apparatus (52) comprising :
a) a control module (54)
a1) configured to define (28) a
general time grid (CTG, 16);
a2) receive each of the sampled continuous data streams of the at least two sensors (10, 12, 14);
a3) cause detecting (26) a gap (18, 20, 22) in the sampled continuous data streams of the at least two sensors (10, 12, 14) considering the general time grid (CTG, 16, 28);
a4) cause synchronizing (30) the sampled continuous data streams which contain information about the gaps 18, 20, 22) received with respect to the general time grid (CTG, 16), so as to create respective synchronized data streams such that the sampled continuous data streams are scaled to the general time grid (CTG, 28) but still contain the gaps, by providing an interpolation (30) on the data streams considering the general time grid (CTG, 16, 28); and
a5) cause processing (34) a gap-filling procedure upon the synchronized data streams in order to generate application input data,
b) wherein the gap-filling procedure (34) in step a5) is preceded by the synchronizing (30) step a4).

2. The apparatus (52) according to claim 1, wherein the control module (54) is further configured to select the gap-filling procedure by at least one of a group comprising linear gap-filling, Fourier-transformation-based gap-filling, and Singular-Spectrum-Analysis-based gap-filling.

3. The apparatus (52) according to anyone of the claims 1 through 2, wherein the control module (54) is configured to cause setting of a gap indicator for a gap (18, 20, 22) detected in the sampled continuous data streams.

4. The apparatus (52) according to anyone of the claims 1 through 3, wherein the control module (54) is configured to cause saving the application input data to a storage.

5. The apparatus (52) according to anyone of the claims 1 through 4, wherein the control module (54) is configured to cause transmitting of the application input data for further analysis.

6. The apparatus (52) according to anyone of the claims 2 through 5, wherein the control module (54) is configured to cause applying the Fourier-transformation of Fourier-Transformation-based gap-filling on all data including the interpolated data.

7. The apparatus (52) according to claim 6, wherein the control module (54) is configured to cause providing a discrete Fourier-transformation and defining a threshold, and to cause the inverse discrete Fourier-transformation considering only coefficients of the spectrum having a value higher than the threshold.

8. The apparatus (52) according to anyone of the claims 2 through 5, wherein the control module (54) is configured to cause initializing the synchronized data streams and a number of Singular-Spectrum-Analysis components for gap-filling and performing pre-processing before performing the Singular-Spectrum- Analysis -based gap-filling.

9. A device (50) for surveillance of an artificial structure, comprising:
at least two sensors (10, 12, 14), each of the at least two sensors (10, 12, 14) being mounted to the artificial structure and supplying a sampled continuous data stream; and an apparatus (52) according to anyone of the claims 1 through 8, wherein the at least two sensors (10, 12, 14) are communicatively coupled to said apparatus (52).

10. A method for surveillance of an artificial structure provided with at least two sensors (10, 12, 14), each of the at least two sensors (10, 12, 14) being mounted to the artificial structure and supplying a sampled continuous data stream, comprising the following steps:
a1) defining (28) a general time grid (CTG, 16);
a2) receiving each of the sampled continuous data streams of the at least two sensors (10, 12, 14);
a3) detecting (26) a gap (18, 20, 22) in the sampled continuous data streams of the at least two sensors (10, 12, 14) considering the general time grid (CTG, 16, 28);
a4) synchronizing (30) the sampled continuous data streams which contain information about the gaps 18, 20, 22) received with respect to the general time grid (CTG, 16), so as to create respective synchronized data streams such that the sampled continuous data streams are scaled to the general time grid (CTG, 28) but still contain the gaps, by providing an interpolation (30) on the data streams considering the general time grid (CTG, 16, 18); and
a5) processing (34) a gap-filling procedure upon the synchronized data streams in order to generate application input data,
b) wherein the gap-filling procedure (34) in step a5) is preceded by the synchronizing (30) step a4).

11. The method according to claim 10, comprising selecting the gap-filling procedure by at least one of a group comprising linear gap-filling, Fourier-transformation-based gap-filling, and Singular-Spectrum-Analysis-based gap-filling.

12. The method according to anyone of the claims 10 through 11, comprising setting of a gap indicator for a gap (18, 20,22) detected in the sampled continuous data streams.

13. The method according to anyone of the claims 10 through 12, comprising saving the application input data to a storage.

14. The method according to anyone of the claims 10 through 13, comprising transmitting of the application input data for further analysis.

15. The method according to anyone of the claims 11 through 14, comprising applying the Fourier-transformation of Fourier-transformation-based gap-filling on all data including the interpolated data.

16. The method according to claim 15, comprising providing a discrete Fourier-transformation and defining a threshold, and causing the inverse discrete Fourier-transformation considering only coefficients of the spectrum having a value higher than the threshold.

17. The method according to anyone of the claims 11 through 14, comprising initializing the synchronized data streams and a number of Singular-Spectrum-Analysis components for gap-filling and performing pre-processing before performing the Singular-Spectrum-Analysis-based gap-filling.

## Patentansprüche

1. Einrichtung (52) zur Verwendung in einer Vorrichtung (50) zur Überwachung eines Bauwerks, die mit wenigstens zwei Sensoren (10, 12, 14) versehen ist, wobei die wenigstens zwei Sensoren (10, 12, 14) jeweils am Bauwerk angebracht sind und einen abgetasteten kontinuierlichen Datenstrom liefern, wobei die Einrichtung (52) umfasst:
a) ein Steuermodul (54),
a1) das dazu ausgelegt ist, ein allgemeines Zeitraster (CTG, 16) zu definieren (28);
a2) jeden der abgetasteten kontinuierlichen Datenströme der wenigstens zwei Sensoren (10, 12, 14) zu empfangen; a3) ein Detektieren (26) einer Lücke (18, 20, 22) in den abgetasteten kontinuierlichen Datenströmen der wenigstens zwei Sensoren (10, 12, 14) unter Berücksichtigung des allgemeinen Zeitrasters (CTG, 16, 28) zu bewirken;
a4) ein Synchronisieren (30) der empfangenen abgetasteten kontinuierlichen Datenströme, die Informationen über die Lücken (18, 20, 22) enthalten, in Bezug auf das allgemeine Zeitraster (CTG, 16) zu bewirken, um jeweilige synchronisierte Datenströme zu erzeugen, so dass die abgetasteten kontinuierlichen Datenströme auf das allgemeine Zeitraster (CTG, 28) skaliert werden, aber immer noch die Lücken enthalten, indem eine Interpolation (30) der Datenströme unter Berücksichtigung des allgemeinen Zeitrasters (CTG, 16, 28) bereitgestellt wird; und
a5) eine Verarbeitung (34) einer Lückenfüllprozedur mit den synchronisierten Datenströmen zu bewirken, um Anwendungseingabedaten zu erzeugen,
b) wobei der Lückenfüllprozedur (34) in Schritt a5) der Schritt a4) des Synchronisierens (30) vorausgeht.

2. Vorrichtung (52) gemäß Anspruch 1, wobei das Steuermodul (54) ferner dazu ausgelegt ist, die Lückenfüllprozedur durch wenigstens eines aus einer Gruppe umfassend lineares Lückenfüllen, auf Fourier-Transformation basiertes Lückenfüllen und auf Singulärspektralanalyse basiertes Lückenfüllen auszuwählen.

3. Vorrichtung (52) gemäß einem der Ansprüche 1 bis 2, wobei das Steuermodul (54) dazu ausgelegt ist, ein Setzen eines Lückenanzeigers für eine in den abgetasteten kontinuierlichen Datenströmen detektierte Lücke (18, 20, 22) zu bewirken.

4. Vorrichtung (52) gemäß einem der Ansprüche 1 bis 3, wobei das Steuermodul (54) dazu ausgelegt ist, ein Speichern der Anwendungseingangsdaten in einem Speicher zu bewirken.

5. Vorrichtung (52) gemäß einem der Ansprüche 1 bis 4, wobei das Steuermodul (54) dazu ausgelegt ist, ein Übertragen der Anwendungseingangsdaten zur weiteren Auswertung zu bewirken.

6. Vorrichtung (52) gemäß einem der Ansprüche 2 bis 5, wobei das Steuermodul (54) dazu ausgelegt ist, das Anwenden der Fourier-Transformation des auf Fourier-Transformation basierten Lückenfüllens auf alle Daten, einschließlich der interpolierten Daten, zu bewirken.

7. Vorrichtung (52) gemäß Anspruch 6, wobei das Steuermodul (54) dazu ausgelegt ist, das Bereitstellen einer diskreten Fourier-Transformation und Definieren eines Schwellenwerts zu bewirken, und die inverse diskrete Fourier-Transformation unter Berücksichtigung von nur Koeffizienten des Spektrums, die einen Wert aufweisen, der höher als der Schwellenwert ist, zu bewirken.

8. Vorrichtung (52) nach einem der Ansprüche 2 bis 5, wobei das Steuermodul (54) dazu ausgelegt ist, ein Initialisieren der synchronisierten Datenströme und einer Anzahl von Singulärspektralanalyse-Komponenten zum Lückenfüllen und Durchführen einer Vorverarbeitung vor dem Durchführen des auf Singulärspektralanalyse basierten Lückenfüllens zu bewirken.

9. Vorrichtung (50) zur Überwachung eines Bauwerks, umfassend:
wenigstens zwei Sensoren (10, 12, 14), wobei die wenigstens zwei Sensoren (10, 12, 14) jeweils am Bauwerk angebracht sind und einen abgetasteten kontinuierlichen Datenstrom liefern; und
eine Vorrichtung (52) gemäß einem der Ansprüche 1 bis 8, wobei die wenigstens zwei Sensoren (10, 12, 14) kommunikativ mit der Vorrichtung (52) gekoppelt sind.

10. Verfahren zur Überwachung eines Bauwerks, das mit wenigstens zwei Sensoren (10, 12, 14) versehen ist, wobei die wenigstens zwei Sensoren (10, 12, 14) jeweils am Bauwerk angebracht sind und einen abgetasteten kontinuierlichen Datenstrom liefern, mit den folgenden Schritten:
a1) Definieren (28) eines allgemeinen Zeitrasters (CTG, 16) ;
a2) Empfangen jedes der abgetasteten kontinuierlichen Datenströme der wenigstens zwei Sensoren (10, 12, 14);
a3) Detektieren (26) einer Lücke (18, 20, 22) in den abgetasteten kontinuierlichen Datenströmen der wenigstens zwei Sensoren (10, 12, 14) unter Berücksichtigung des allgemeinen Zeitrasters (CTG, 16, 28) ;
a4) Synchronisieren (30) der empfangenen abgetasteten kontinuierlichen Datenströme, die Informationen über die Lücken (18, 20, 22) enthalten, in Bezug auf das allgemeine Zeitraster (CTG, 16), um jeweilige synchronisierte Datenströme zu erzeugen, so dass die abgetasteten kontinuierlichen Datenströme auf das allgemeine Zeitraster (CTG, 28) skaliert werden, aber immer noch die Lücken enthalten, indem eine Interpolation (30) der Datenströme unter Berücksichtigung des allgemeinen Zeitrasters (CTG, 16, 18) bereitgestellt wird; und
a5) Verarbeiten (34) einer Lückenfüllprozedur mit den synchronisierten Datenströmen, um Anwendungseingabedaten zu erzeugen,
b) wobei der Lückenfüllprozedur (34) in Schritt a5) der Schritt a4) des Synchronisierens (30) vorausgeht.

11. Verfahren gemäß Anspruch 10, umfassend ein Auswählen der Lückenfüllprozedur durch wenigstens eines aus einer Gruppe umfassend lineares Lückenfüllen, auf Fourier-Transformation basiertes Lückenfüllen und auf Singulärspektralanalyse basiertes Lückenfüllen.

12. Verfahren gemäß einem der Ansprüche 10 bis 11, umfassend ein Setzen eines Lückenanzeigers für eine in den abgetasteten kontinuierlichen Datenströmen detektierte Lücke (18, 20, 22).

13. Verfahren gemäß einem der Ansprüche 10 bis 12, umfassend ein Speichern der Anwendungseingangsdaten in einem Speicher.

14. Verfahren gemäß einem der Ansprüche 10 bis 13, umfassend ein Übertragen der Anwendungseingangsdaten zur weiteren Auswertung.

15. Verfahren gemäß einem der Ansprüche 11 bis 14, umfassend ein Anwenden der Fourier-Transformation des auf Fourier-Transformation basierten Lückenfüllens auf alle Daten, einschließlich der interpolierten Daten.

16. Verfahren gemäß Anspruch 15, umfassend ein Bereitstellen einer diskreten Fourier-Transformation und Definieren eines Schwellenwerts, und Bewirken der inversen diskreten Fourier-Transformation unter Berücksichtigung von nur Koeffizienten des Spektrums, die einen Wert aufweisen, der höher als der Schwellenwert ist.

17. Verfahren gemäß einem der Ansprüche 11 bis 14, umfassend ein Initialisieren der synchronisierten Datenströme und einer Anzahl von Singulärspektralanalyse-Komponenten zum Lückenfüllen und Durchführen einer Vorverarbeitung vor dem Durchführen des auf Singulärspektralanalyse basierten Lückenfüllens.

## Revendications

1. Appareil (52) à utiliser dans un dispositif (50) pour la surveillance d'une structure artificielle pourvue d'au moins deux capteurs (10, 12, 14), chacun des au moins deux capteurs (10, 12, 14) étant monté sur la structure artificielle et fournissant un flux continu de données échantillonnées, l'appareil (52) comprenant :
a) un module de contrôle (54)
a1) configuré pour définir (28) une grille temporelle générale (CTG, 16) ;
a2) recevoir chacun des flux continus de données échantillonnées des au moins deux capteurs (10, 12, 14) ;
a3) faire détecter (26) un trou (18, 20, 22) dans les flux continus de données échantillonnées des au moins deux capteurs (10, 12, 14) en tenant compte de la grille temporelle générale (CTG, 16, 28) ;
a4) faire synchroniser (30) les flux continus de données échantillonnées qui contiennent des informations sur les trous (18, 20, 22) reçus par rapport à la grille temporelle générale (CTG, 16), de manière à créer des flux de données synchronisés respectifs de telle sorte que les flux continus de données échantillonnées sont réduits à la grille temporelle générale (CTG, 28), mais contiennent encore les trous, en appliquant une interpolation (30) sur les flux de données en tenant compte de la grille temporelle générale (CTG, 16, 28) ; et
a5) faire appliquer (34) une procédure de remplissage des trous sur les flux de données synchronisés afin de générer des données d'entrée d'application,
b) dans lequel la procédure de remplissage des trous (34) à l'étape a5) est précédée par l'étape a4) de synchronisation (30) .

2. Appareil (52) selon la revendication 1, dans lequel le module de contrôle (54) est également configuré pour sélectionner la procédure de remplissage des trous parmi au moins une procédure d'un groupe comprenant un remplissage des trous linéaire, un remplissage des trous basé sur une transformée de Fourier, et un remplissage des trous basé sur une analyse du spectre singulier.

3. Appareil (52) selon l'une quelconque des revendications 1 à 2, dans lequel le module de contrôle (54) est configuré pour faire régler un indicateur de trou pour un trou (18, 20, 22) détecté dans les flux continus de données échantillonnées.

4. Appareil (52) selon l'une quelconque des revendications 1 à 3, dans lequel le module de contrôle (54) est configuré pour faire sauvegarder les données d'entrée d'application dans un dispositif de stockage.

5. Appareil (52) selon l'une quelconque des revendications 1 à 4, dans lequel le module de contrôle (54) est configuré pour faire transmettre les données d'entrée d'application pour une analyse complémentaire.

6. Appareil (52) selon l'une quelconque des revendications 2 à 5, dans lequel le module de contrôle (54) est configuré pour faire appliquer la transformée de Fourier du remplissage des trous basé sur une transformée de Fourier sur toutes les données, y compris les données interpolées.

7. Appareil (52) selon la revendication 6, dans lequel le module de contrôle (54) est configuré pour faire appliquer une transformée de Fourier discrète et définir un seuil, et pour faire appliquer la transformée de Fourier discrète inverse en tenant uniquement compte de coefficients du spectre ayant une valeur supérieure au seuil.

8. Appareil (52) selon l'une quelconque des revendications 2 à 5, dans lequel le module de contrôle (54) est configuré pour faire initialiser les flux de données synchronisés et un nombre de composantes d'analyse du spectre singulier pour le remplissage des trous et réaliser un prétraitement avant de réaliser le remplissage des trous basé sur une analyse du spectre singulier.

9. Dispositif (50) de surveillance d'une structure artificielle, comprenant :
au moins deux capteurs (10, 12, 14), chacun des au moins deux capteurs (10, 12, 14) étant monté sur la structure artificielle et fournissant un flux continu de données échantillonnées ; et
un appareil (52) selon l'une quelconque des revendications 1 à 8, les au moins deux capteurs (10, 12, 14) étant couplés de façon communicante audit appareil (52).

10. Procédé de surveillance d'une structure artificielle pourvue d'au moins deux capteurs (10, 12, 14), chacun des au moins deux capteurs (10, 12, 14) étant monté sur la structure artificielle et fournissant un flux continu de données échantillonnées, comprenant les étapes suivantes :
a1) définir (28) une grille temporelle générale (CTG, 16) ;
a2) recevoir chacun des flux continus de données échantillonnées des au moins deux capteurs (10, 12, 14) ;
a3) détecter (26) un trou (18, 20, 22) dans les flux continus de données échantillonnées des au moins deux capteurs (10, 12, 14) en tenant compte de la grille temporelle générale (CTG, 16, 28) ;
a4) synchroniser (30) les flux continus de données échantillonnées qui contiennent des informations sur les trous (18, 20, 22) reçus par rapport à la grille temporelle générale (CTG, 16), de manière à créer des flux de données synchronisés respectifs de telle sorte que les flux continus de données échantillonnées sont réduits à la grille temporelle générale (CTG, 28), mais contiennent encore les trous, en appliquant une interpolation (30) sur les flux de données en tenant compte de la grille temporelle générale (CTG, 16, 18) ; et
a5) appliquer (34) une procédure de remplissage des trous sur les flux de données synchronisés afin de générer des données d'entrée d'application,
b) dans lequel la procédure de remplissage des trous (34) à l'étape a5) est précédée par l'étape a4) de synchronisation (30) .

11. Procédé selon la revendication 10, comprenant la sélection de la procédure de remplissage des trous parmi au moins une procédure d'un groupe comprenant un remplissage des trous linéaire, un remplissage des trous basé sur une transformée de Fourier, et un remplissage des trous basé sur une analyse du spectre singulier.

12. Procédé selon l'une quelconque des revendications 10 à 11, comprenant le réglage d'un indicateur de trou pour un trou (18, 20, 22) détecté dans les flux continus de données échantillonnées.

13. Procédé selon l'une quelconque des revendications 10 à 12, comprenant la sauvegarde des données d'entrée d'application dans un dispositif de stockage.

14. Procédé selon l'une quelconque des revendications 10 à 13, comprenant la transmission des données d'entrée d'application pour une analyse complémentaire.

15. Procédé selon l'une quelconque des revendications 11 à 14, comprenant l'application de la transformée de Fourier du remplissage des trous basé sur une transformée de Fourier sur toutes les données, y compris les données interpolées.

16. Procédé selon la revendication 15, comprenant l'application d'une transformée de Fourier discrète et la définition d'un seuil, et l'application de la transformée de Fourier discrète inverse en tenant uniquement compte de coefficients du spectre ayant une valeur supérieure au seuil.

17. Procédé selon l'une quelconque des revendications 11 à 14, comprenant l'initialisation des flux de données synchronisés et un nombre de composantes d'analyse du spectre singulier pour le remplissage des trous et la réalisation d'un prétraitement avant la réalisation du remplissage des trous basé sur une analyse du spectre singulier.
